# Europäisches Patentamt

## European Patent Office

## Office européen des brevets

(11) Publication number: **0 061 916**
**B1**

(12) **EUROPEAN PATENT SPECIFICATION**

(45) Date of publication of patent specification: **08.07.87**

(21) Application number: **82301619.1**

(22) Date of filing: **26.03.82**

(51) Int. Cl.⁴: **F 03 B 13/12, F 03 B 13/26**

(54) **Water engine.**

(30) Priority: **26.03.81 GB 8109477**

(43) Date of publication of application:
**06.10.82 Bulletin 82/40**

(45) Publication of the grant of the patent:
**08.07.87 Bulletin 87/28**

(84) Designated Contracting States:
**AT BE CH DE FR IT LI LU NL SE**

(56) References cited:
**DE-C- 406 134**
**GB-A- 183 826**
**GB-A- 384 603**
**GB-A-2 034 413**
**US-A-1 353 906**

(73) Proprietor: **AUR HYDROPOWER LIMITED**
**8 St. Bride Street**
**London EC4 (GB)**

(72) Inventor: **Wilson, Eric Montgomery**
**12 Headlands Road**
**Bramhall Stockport SK7 3AN (GB)**
Inventor: **Bullock, Geoffrey Norman**
**Keyhaven 85 Brandreth Drive**
**Parbold Lancashire (GB)**

(74) Representative: **Allen, William Guy Fairfax et al**
**J.A. KEMP & CO. 14 South Square Gray's Inn**
**London WC1R 5EU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a water engine for extracting energy from a head of water, and has particular application as a tidal barrage or a river barrage.

Reference is hereby made to GB—A—2034413, which shows a device in which the sudden closure of a valve member against a valve seat causes a rapid build up of hydraulic pressure in a passage and this is used to pressurise air in a chamber, to operate an air motor, or is used to feed water under pressure to a hydraulic motor from which power may be derived. This is rather an inefficient way to derive power from the barrage.

DE—A—406134 discloses a water engine for extracting energy from a head of water, including a barrage having a differential head of water between upstream and downstream sides, the barrage having defined therein a working chamber, a water-driven double acting piston member arranged for vertical reciprocal movement in the working chamber, to divide the working chamber into two parts, means for admitting water from the upstream side of the barrage alternately to flow to one of the two parts of the working chamber and then into the other, and for allowing water simultaneously to discharge to the downstream side of the barrage by alternately flowing from the other of the two parts of the chamber, and then the one, respectively, thereby to cause a piston to reciprocate in the working chamber, and means to derive power from the reciprocal movement of the piston member.

The present invention is characterised in that the working chamber extends longitudinally of the barrage, in that the double acting piston member is mounted for horizontal reciprocal movement in the working chamber and longitudinally of the working chamber, in that the means for admitting water to the upstream side comprise horizontally spaced apart openings, one on each side of the piston member, and valves to close said openings, in that the means for discharging water to the downstream side comprise horizontally spaced apart openings, one on each side of the piston member, and valves to close said openings and in that said valves each comprise vertically elongate butterfly valves, each pivotable about a vertical axis.

Because of the fact that the piston member moves horizontally, and the valves are vertically elongate butterfly valves pivotably about a vertical axis the efficiency of operation is not effected as a function of the difference in water height on the two sides of the barrage to such an extent as in DE—A—406134, which is a real problem if the barrage is used as a tidal barrier. The horizontal movement of the construction of the invention can be utilized even at relatively low water level differences. The horizontal movement also enables one more readily to use a preferred construction in which the engine comprises two or more working chambers, each chamber including a double acting piston member, each piston member being attached to a common carriage. This simplifies power take-off, as a single means of energy take-off can be attached to the carriage, to extract power from all the working chambers.

The structure of the present invention is inherently very simply as compared with the structure of DE—A—406134. The latter, as illustrated, requires the use of an excavation under the barrage to form the cylinder and/or the use of the syphon; the construction of the invention does not and merely requires a barrage to be provided with the horizontal chambers extending longitudinally therein, e.g. by building two adjacent, spaced parallel walls with horizontally spaced openings. The construction of DE—A—406134 will also suffer from problems arising from floating and suspending debris in the water, particularly when used in rivers and canals. The cylinder of this construction will tend to silt up and debris will accumulate on the top of the piston, in due course, rendering the water engine to a state of very low efficiency or to an inoperative state. Such a problem does not arise with a horizontally movable piston and with vertical elongate valves and valve openings, as in the construction of the present invention, because any debris will simply flow out with the water and will additionally be swept out by the piston.

If desired a third or intermediate position of the valves may be provided, in which water is allowed to pass directly through the barrage, without significant inhibition by the valve or valves. This enables flood conditions to be contended with and also assists in ensuring the chamber is maintained clean.

In a preferred embodiment, a plurality of valves are disposed along the length of the barrage, and move in unison or near unison, and in so doing divert water into and out of working chambers between them. The movement of the valves in unison or near unison can be controlled by a common linkage, as will be described hereinafter, or by individual pneumatic or hydraulic activations with appropriate control valves.

The valves may have a non-planar profile such that rotation of each valve is effected at least partly by the flow of water through the engine.

The valves may be arranged asymmetrically with respect to the upstream and downstream sides of the barrage. Alternatively, the engine may comprise means for allowing the engine to operate when the head drop occurs in either direction across the barrage.

Power take-off from the engine may be by means of a hydraulic pump, arranged to pressurise hydraulic fluid on movement of the water driven member or members. For example, a hydraulic ram pump may be attached to the moveable carriage and a point fixed with respect to the barrage, such that movement of the carriage along the barrage results in successive extension and compression of the ram pump to generate hydraulic pressure. If more than one such pump working in parallel is provided, all, or only one or more of the pumps may be utilised as the force on the carriage varies with variation of the head of water available. This can be a useful feature in tidal applications, where the head of water may not be constant.

A preferred embodiment of the invention will now be described with reference to the accompanying drawings, in which:—

Figure 1 is a schematic perspective view of an engine in accordance with the invention,

Figures 2 to 4 are schematic plan views of the engine of Figure 1 in various stages of operation, the top part being omitted for clarity.

Figure 5 shows three parts of a cycle of operation using a non-planar valve, and

Figure 6 shows two positions of an asymmetrically arranged valve.

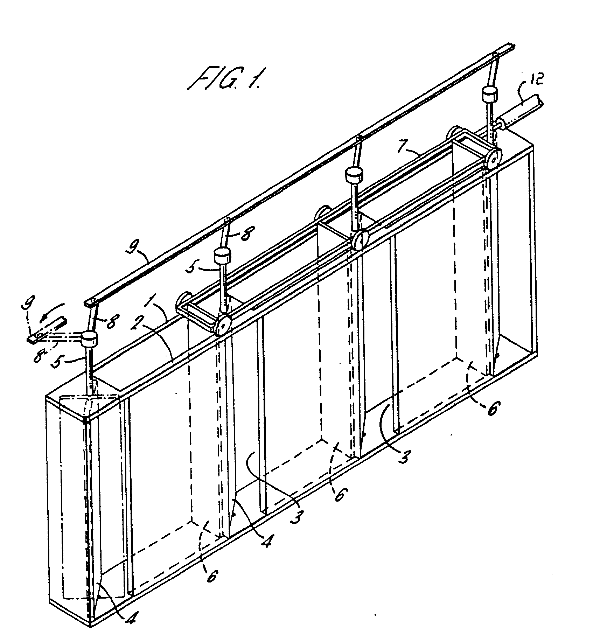

As can be seen, Figure 1 is purely schematic, but serves to illustrate the type of mechanism which can be used, for example in tidal or river applications. A barrage has an upstream wall 1 and a downstream wall 2 defining between them working chambers 3.

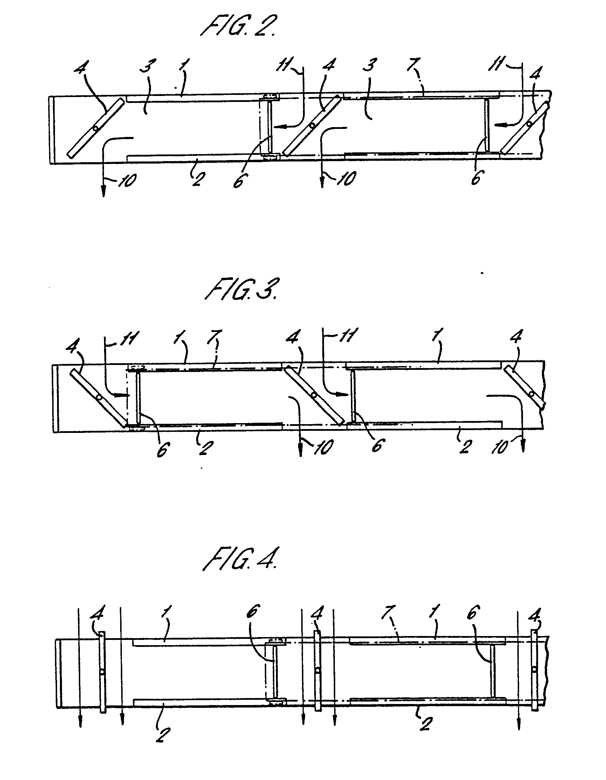

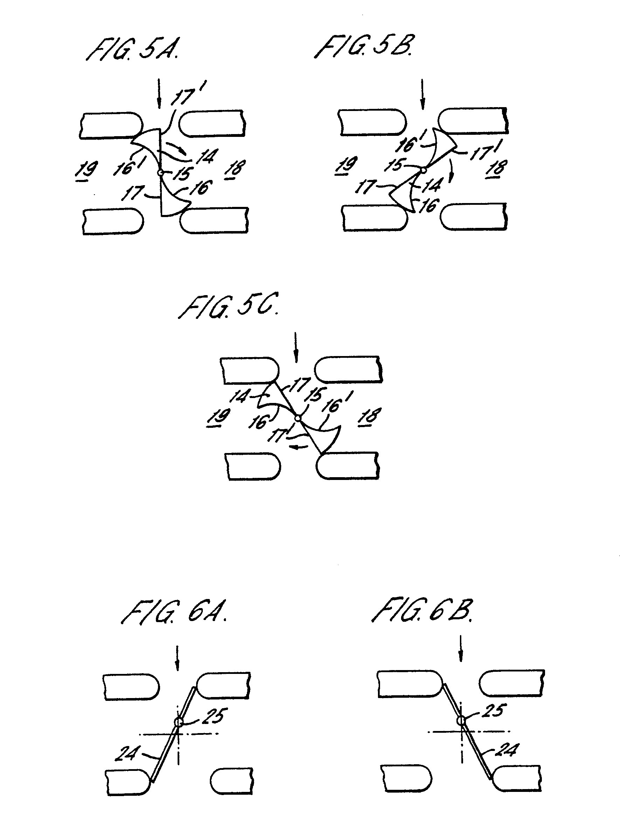

Water driven double acting piston members 16 are affixed to a wheeled carriage 7 which can move on its wheels between the positions shown in Figures 2 and 3. Butterfly valves 4 control the flow of water into and out of working chambers 3. The valves 4 are mounted for rotation on shafts 5 and are connected via cranks 8 to a connecting bar 9 so that the valves 4 move in unison.

A hydraulic ram pump 12 is attached at one of its ends to the carriage 7 and at its other end to a fixed point, such that reciprocal movement of the carriage along the top of the walls 1 and 2 causes the compression of hydraulic fluid in the ram pump 10. Various other ways may be provided of converting the movement of the carriage into hydraulic power. For example a lever arrangement may be provided to shorten the ram stroke and raise the pressure generated for a given movement of the carriage. Alternatively a profiled rail may be mounted on the carriage non-parallel with its direction of motion, such that the rail bears on a hydraulic ram to provide slow compression of the ram on movement of the carriage. The compressed hydraulic fluid can be used to drive a hydraulic motor, or hydraulic turbine for the generation of electricitiy. The compressed hydraulic fluid is also preferably used as a source of power to move valves 4 to control the flow of water into and out of the chambers 3.

The operating cycle of the machine is best described with reference to Figures 2, 3 and 4 of the drawings. In Figure 2, the carriage 7, is at right extreme of its traverse, and the valves 4 have just moved into the position shown. Water thus flows from the upstream side 11 of the barrage to fill the respective portions of the working chambers 3 to the right of each piston member 6, and thus drive the piston members 6 and with them the carriage 7, to the left, and expel water from the opposite ends of the working chambers to the downstream side 10 of the barrage. As the carriage moves, hydraulic fluid is compressed by the double acting ram pump 12 shown in Figure 1.

As the valves 4 move to the position shown in Figure 3, water is allowed to exit from the working chambers to the downstream side 10 of the barrage from the right side of each piston member 6, driven by water entering from the upstream side 11 of the barrage.

In the valve position shown in Figure 4, water is allowed to flow directly through the barrage, affording an easy and convenient way of stopping the machine.

By arranging for movement of the carriage to cause opening and closing of the valves not into the positions shown in Figures 2 and 3, but into positions in between the Figure 2 and 3 positions and that shown in Figure 4, varying proportions of the water passing through the barrage can be used for power extraction. Thus the arrangement may be such that only small oscillations of the valves 4 about their centre position takes place, in response to movement of the carriage 7, and this small oscillation is sufficient to generate the desired force on the piston members.

This mode of operation is particularly useful in tidal applications, in which very large volumes of water may be available, but at a head which varies throughout the tidal cycle. Thus, when large heads are available, valves 4 need only move by small amounts, allowing a relatively large amount of water to pass through the barrage, wherein when only small heads are available, the valves move between the Figure 2 and Figure 3 position, such that the greater proportion of the energy of the water flowing through the barrage is extracted.

For applications in which water conservation is of more importance, for example in a river application, valves (4) may be arranged to move between the two positions shown in Figure 2 and 3, but through an intermediate position transverse to the water flow. Such a mode of operation will give rise to less water loss during the operation cycle. Alternatively, paddles of the valves 4 may be caused to rotate continuously during the operating cycle and may be in part or totally driven by the flow of water through the barrage. Figure 5 shows diagrammatically a valve arrangement for using the flow of water through the barrage to rotate the valves. A valve 14 is pivoted centrally at 15, and on each side of the central part the valve has a curved face 16, 16' and a planar face 17, 17'. In a central position (Figure 5a) flow of water acts on the valve to turn the valve 14 clockwise. This causes a switch in engine operation as right hand chamber 18 changes from filling to emptying, and left hand chamber 19 changes from emptying to filling (Figure 5b). Rotation of the valve 14 continues until the engine operation is switched again (Figure 5c). The particular form of valve employed is not critical, and any known form of valve may be used capable of allowing the desired water flows. It will of course be appreciated that the arrangement shown has the advantage that a single valve serves two working chambers.

An advantage of the arrangement shown is that the force produced on the carriage is substantially linear over the working cycle.

It should also be appreciated that the engine described above is reversible, in that either wall 1 or wall 2 may be on the upstream side. This renders the engine particular suitable for tidal applications. Because high efficiencies can be obtained with heads as low as a few feet, an engine of the type described has wide application in estuaries and the like, where the tidal rise and fall is relatively low.

For applications in which the upstream side is always the same side of the barrage some asymmetry can be introduced into the overall arrangement with a view to improving the engine's performance. Figure 6 illustrates an offset pivot arrangement. A valve 24 is pivoted at 25 such that the length of the valve 24 on the downstream side of the pivot 25 is greater than the length of the valve 24 on the upstream side of the pivot. This arrangement causes the valve 24 to require less energy to switch the valve 24 between the positions shown in Figure 6a and Figure 6b.

## Claims

1. A water engine for extracting energy from a head of water, including a barrage having a differential head of water between upstream and downstream sides, a working chamber (3) in said barrage, means to control the flow of water into and out of said chamber, a water driven double-acting piston member (6) arranged for reciprocal movement in the working chamber (3), to divide the working chamber into two parts, means (4) for admitting water from the upstream side of the barrage alternately to flow into one of the two parts of the chamber and then into the other, and for allowing water simultaneously to be discharged to the downstream side of the barrage by alternately flowing from the other of the two parts of the chamber and then the one, respectively, thereby to cause the piston member (6) to reciprocate in the working chamber (3), and means (9) connecting the piston member directly to a power generator to derive power from the reciprocal movement of the piston member (6), characterised in that the working chamber (3) extends longitudinally of the barrage, in that the double-acting piston member (6) is mounted for horizontal reciprocal movement in the working chamber (3) and longitudinally of the working chamber, in that the means for admitting water to the upstream side (11) comprise horizontally spaced apart openings, one on each side of the piston member (6), and valves (4) to close said openings, in that the means for discharging water to the downstream side (10) comprise horizontally spaced apart openings, one on each side of said piston member (6), and valves (4) to close said opening and in that said valves each comprise vertically elongate butterfly valves, each pivotable about a vertical axis.

2. An engine as claimed in claim 1, characterised in that each means for admitting water to the working chamber (3) includes a single valve (4) having a first position enabling water to pass from the upstream side (11) of the barrage into the working chamber (3), and a second position, enabling water to pass from the working chamber (3) to the downstream side (10) of the barrage.

3. An engine as claimed in claim 2 characterized in that the valve (4) has a third position enabling direct flow of water from the upstream to the downstream side of the barrage.

4. An engine as claimed in claims 2 or 3 characterized in that the or each valve (4) has a non-planar profile such that rotation of the or each valve is effected at least partly by the flow of water through the engine.

5. An engine as claimed in any one of claims 2 to 4 characterized in that the or each valve (4) is arranged asymmetrically with respect to the upstream and downstream sides of the barrage.

6. An engine as claimed in any preceding claim characterized by a plurality of working chambers (3), each chamber being provided with a water-driven double acting piston member (6), and each piston member being attached to a common carriage (7).

7. An engine as claimed in any one of the preceding claims characterized by means for allowing the engine to operate when the head drop occurs in either direction across the barrage.

8. An engine as claimed in any preceding claim, characterized in that the means to derive power from the reciprocal movement of the piston member (6) comprises a hydraulic pump (12) to generate pressure in a hydraulic fluid.

9. An engine as claimed in claim 8 as dependent on claim 6 characterized in that the hydraulic pump (12) is a ram connected at one of its ends to the movable carriage and at the other end to a fixed point.

## Patentansprüche

1. Wasserkraftmaschine zur Gewinnung von Energie von einem Wassergefälle mit einem einen Wasserdruckunterschied zwischen einer stromaufwärtigen sowie einer stromabwärtigen Seite aufweisenden Stauwehr, mit einer Arbeitskammer (3) in dem Stauwehr, mit Einrichtungen zur Regelung des Wasserflusses in die und aus der Arbeitskammer, mit einem wassergetriebenen doppelt-wirkenden Kolbenelement (6), das für eine Hin- und Herbewegung in der Arbeitskammer (3) angeordnet ist, um die Arbeitskammer in zwei Abteile zu unterteilen, mit einen Wasserfluß von der stromaufwärtigen Seite des Stauwehrs abwechselnd in das eine der beiden Abteile der Kammer und dann in das andere zulassenden Einrichtungen (4), die jeweils gleichzeitig einen Abfluß des Wassers von dem anderen der beiden Abteile der Kammer und dann von dem einen Abteil ermöglichen, so daß das Kolbenelement (6) in der Arbeitskammer (3) eine Hin- und Herbewegung ausführt, und mit das Kolbenelement unmittelbar mit einem Energieerzeuger zur Gewinnung von Energie aus der Hin- ·

und Herbewegung des Kolbenelements (6) verbindenden Einrichtungen (9), dadurch gekennzeichnet, daß sich die Arbeitskammer (3) in der Längsrichtung des Stauwehrs erstreckt, daß das doppeltwirkende Kolbenelement (6) in der Arbeitskammer (3) für eine horizontale sowie längs dieser gerichtete Hin- und Herbewegung angeordnet ist, daß die den Wasserzulauf zur stromaufwärtigen Seite (11) zulassenden Einrichtungen horizontal zueinander beabstandete Öffnungen, von denen sich eine auf jeder Seite des Kolbenelements (6) befindet, sowie Regelorgane (4) zum Verschließen der Öffnungen umfassen, daß die Einrichtungen zum Abführen des Wassers zur stromabwärtigen Seite (10) horizontal zueinander beabstandete Öffnungen, von denen sich eine auf jeder Seite des Kolbenelements (6) befindet, sowie Regelorgane (4) zum Verschließen der Öffnungen umfassen und daß die Regelorgane in vertikaler Richtung längliche, um eine vertikale Achse schwenkbare Klappen sind.

2. Maschine nach Anspruch 1, dadurch gekennzeichnet, daß jede, einen Zulauf von Wasser zur Arbeitskammer (3) zulassende Einrichtung ein einzelnes Regelorgan (4) umfaßt, das eine erste, einen Wasserfluß von der stromaufwärtigen Seite (11) des Stauwehrs in die Arbeitskammer (3) ermöglichende Stellung und eine zweite, einen Wasserfluß von der Arbeitskammer (3) zur stromabwärtigen Seite (10) des Stauwehrs ermöglichende Stellung hat.

3. Maschine nach Anspruch 2, dadurch gekennzeichnet, daß das Regelorgan (4) eine dritte, einen unmittelbaren Wasserfluß von der stromaufwärtigen zur stromabwärtigen Seite des Stauwehrs ermöglichende Stellung hat.

4. Maschine nach Anspruch 2 oder 3, dadurch gekennzeichnet, daß das oder jedes Regelorgan (4) ein unebenes Profil hat, so daß eine Drehung des oder jedes Regelorgans wenigstens teilweise durch den Wasserfluß durch die Maschine hindurch herbeigeführt wird.

5. Maschine nach einem der Ansprüche 2 bis 4, dadurch gekennzeichnet, daß das oder jedes Regelorgan (4) mit Bezug zur stromaufwärtigen sowie stromabwärtigen Seite des Stauwehrs asymmetrisch angeordnet ist.

6. Maschine nach einem der vorhergehenden Ansprüche, gekennzeichnet durch eine Mehrzahl von Arbeitskammern (3), von denen jede mit einem wassergetriebenen doppeltwirkenden Kolbenelement (6) ausgestattet ist, wobei jedes Kolbenelement an einem gemeinsamen Wagen (7) befestigt ist.

7. Maschine nach einem der vorhergehenden Ansprüche, gekennzeichnet, durch Einrichtungen, die einen Betrieb der Maschine bei einem Druckgefälle in jeder der beiden Richtungen quer zum Stauwehr zulassen.

8. Maschine nach einem der vorhergehenden Ansprüche, dadurch gekennzeichnet, daß die Einrichtung zur Gewinnung von Energie aus der Hin- und Herbewegung des Kolbenelements (6) eine einen Druck in einem Hydraulikfluid erzeugende Hydraulikpumpe (12) umfaßt.

9. Maschine nach Anspruch 8 in Abhängigkeit von Anspruch 6, dadurch gekennzeichnet, daß die Hydraulikpumpe (12) eine Kolbenpumpe ist, die an ihrer einen Stirnseite mit dem beweglichen Wagen und an ihrer anderen Stirnseite mit einem Festpunkt verbunden ist.

**Revendications**

1. Machine hydraulique pour extraire l'énergie d'une hauteur d'eau, comprenant un barrage présentant une hauteur d'eau différentielle entre les côtés amont et aval, une chambre de travail (3) dans ledit barrage, des moyens pour commander l'écoulement de l'eau dans et hors de ladite chambre, un organe à piston à double effet (6) entraîné par l'eau et monté de façon à effectuer un mouvement de va-et-vient dans la chambre de travail (3) pour diviser la chambre de travail en deux parties, des moyens (4) pour admettre l'eau provenant du côté amont du barrage de façon qu'elle s'écoule alternativement dans l'une des deux parties de la chambre puis dans l'autre, pour permettre à l'eau d'être simultanément déchargée sur le côté aval du barrage en s'écoulant alternativement de l'autre des deux parties de la chambre, puis de la première respectivement, amenant ainsi l'organe à piston (6) à effectuer un mouvement de va-et-vient dans la chambre de travail (3), et des moyens (9) reliant l'organe à piston directement à un générateur de puissance pour dériver la puissance du mouvement de va-et-vient de l'organe à piston (6), caractérisée en ce que la chambre de travail (3) s'étend longitudinalement par rapport au barrage, en ce que l'organe à piston à double effet (6) est monté de manière à effectuer un mouvement de va-et-vient horizontal dans la chambre de travail (3) et longitudinalement dans la chambre de travail, et en ce que les moyens pour admettre l'eau sur le côté amont (11) comprennent des ouvertures espacées horizontalement, à raison d'une de chaque côté de l'organe à piston (6), et des vannes (4) pour fermer lesdites ouvertures, en ce que les moyens pour décharger l'eau sur le côté aval (10) comprennent des ouvertures espacées horizontalement, à raison d'une de chaque côté dudit organe à piston (6), et des vannes (4) pour fermer lesdites ouvertures, et en ce que lesdites vannes comprennent chacune des vannes papillon allongées verticalement, chacune pouvant pivoter autour d'une axe vertical.

2. Machine selon la revendication 1, caractérisée en ce que chaque moyen pour admettre l'eau dans la chambre de travail (3) comprend une unique vanne (4) présentant une première position permettant à l'eau de passer du côté amont (11) du barrage dans la chambre de travail (3) et une seconde position permettant à l'eau de passer de la chambre de travail (3) vers le côté aval (10) du barrage.

3. Machine selon la revendication 2, caractérisée en ce que la vanne (4) comprend une troisième position qui permet l'écoulement direct de l'eau entre le côté amont et le côté aval du barrage.

4. Machine selon la revendication 2 ou 3, caractérisée en ce que la ou chaque vanne (4) présente un profil non plan tel que la rotation de la ou de chaque vanne est réalisée au moins en partie par l'écoulement de l'eau passant par la machine.

5. Machine selon l'une quelconque des revendications 2, à 4, caractérisée en ce que la ou chaque vanne (4) est disposée de façon asymétrique par rapport aux côtés amont et aval du barrage.

6. Machine selon l'une quelconque des revendications précédentes, caractérisée par une pluralité de chambres de travail (3), chaque chambre étant munie d'un organe à piston à double effet (6) entraîné par l'eau, chaque organe à piston étant fixé à un chariot commun (7).

7. Machine selon l'une quelconque des revendications précédentes, caractérisée par des moyens pour permettre à la machine de fonctionner lorsque survient une baisse de hauteur d'eau dans l'une ou l'autre direction au travers du barrage.

8. Machine selon l'une quelconque des revendications précédentes, caractérisée en ce que les moyens pour dériver la puissance du mouvement de va-et-vient de l'organe à piston (6) comprennent une pompe hydraulique (12) pour engendrer une pression dans un fluide hydraulique.

9. Machine selon la revendication 8, lorsqu'elle dépend de la revendication 6, caractérisée en ce que la pompe hydraulique (12) est un bélier relié à l'une de ses extrémités au chariot mobile et à son autre extrémité à un point fixe.

FIG. 1.

FIG. 2.

FIG. 3.

FIG. 4.

FIG. 5A.

FIG. 5B.

FIG. 5C.

FIG. 6A.

FIG. 6B.